## Europäisches Patentamt

## European Patent Office

## Office européen des brevets

(11) Publication number: **0 051 322**
**B1**

(12) **EUROPEAN PATENT SPECIFICATION**

(45) Date of publication of patent specification: **05.03.86**

(51) Int. Cl.⁴: **H 01 M 4/74**

(21) Application number: **81110831.5**

(22) Date of filing: **05.10.79**

(60) Publication number of the earlier application in accordance with Art. 76 EPC: **0 009 816**

(54) **Battery grid.**

(30) Priority: **10.10.78 US 949934**

(43) Date of publication of application:
**12.05.82 Bulletin 82/19**

(45) Publication of the grant of the patent:
**05.03.86 Bulletin 86/10**

(84) Designated Contracting States:
**AT BE CH DE FR GB IT LU NL SE**

(56) References cited:
**FR-A- 457 746**
**FR-A-2 245 092**

(73) Proprietor: **BALL CORPORATION**
**345 South High Street**
**Muncie Indiana 47302 (US)**

(72) Inventor: **McDowell, Terry T.**
**1404 Kevin Lane**
**Greeneville Tenn 37743 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## Description

The invention relates to a battery grid comprising a metal grid structure defining a header and a lug connection portion thereon, an open network depending from the header over the entire length thereof, said open network defining cells being provided with nodes projecting therefrom and having opposed pairs of faces defining a polygonal cross-section.

Battery grids of this type are generally made by expanding a metal sheet to form an open network structure and thereafter applying paste thereto by means readily available in the art. The step of expansion in the process to form the expanded battery grid structure may be readily made by conventional processes, such as disclosed in US—A—3 891 459. After expansion, the expanded structure is subjected to a sizing and orienting process wherein the structure is formed to a predetermined size. After this step the expanded structure is pasted and the pasting is accomplished by moving the structure into a zone where an active material, generally a thick lead-containing paste, is applied to the open network. Various means may be used to apply the active material to the expanded structure.

In order to deliver a uniform charge for distribution upon and into the open network of the grid without materially deforming the same, pasting machines are utilized and are generally of the so-called Lund or fixed orifice type or the Winkel or belt type. In the Lund type, a strip of battery paste is fed between a pair of rollers rotating to apply pressure to the grid, the paste being thereby forced into the grid structure. In the Winkel belt type, the grids are fed horizontally on a belt under a roller where the battery paste is applied. Pasting machines have also been developed that use ultrasonic energy to convert battery pastes from their normally nonflowable form to a flowable form. After the expanded structure is subjected to the direct and continuous charge of paste, the pasted grid is moved into a wiping or leveling zone where a doctor blade or the nip of a set of spaced apart rollers produce a uniform paste distribution. In this fashion the paste is compressed by mechanical forces into the interstices of the network, the leveling being such as to merely allow the grid structure itself to freely pass through the zone and undergo only minimum, if any, deformation. Thereafter, the pasted grid is subjected to a drying operation to thereby affix the paste to the network. In a commercial operation, the production of grids is generally made from a large length of sheet material so that there are a multiplicity of grid structures thereon comprising expanded and unexpanded portions. After drying, the structure must be subjected to a separation or cutting operation to sectionalize and set free the individual grids for further processing. Since such structures are more or less in a delicate state, any slitting or cutting must be carefully done so as not to cause loss of paste from the pasted network. It will be appreciated that the battery grids are easily deformable and may lose their character if adequate means are not employed to handle them. Any undue treatment would cause disruption or loss of paste and, therefore, rejection of the grid structure.

In US—A—1 982 485, a battery grid is described having an expanded portion. In US—A—3 310 438 a dispersion strengthened lead battery grid structure is disclosed. The structure is formed from expanded lead stock. In US—A—3 947 936, expanded metal is disclosed that has been coined to enhance the characteristics thereof. In US—A—4 016 633, a battery grid is disclosed which is made by casting and which is subsequently flattened by a pressing process.

A battery grid of the type described in the beginning is known from US—A—3 881 952, this battery grid as well as the battery grid disclosed in US—A—3 891 459 has nodes that have been flattened by rolling techniques to form certain polygonal configurations. However, such battery grid is relatively easily deformable and therefore any undue treatment would cause disruption or loss of paste during the last production steps of the battery grid when and after the paste has been applied to the battery grid.

It is therefore object of the invention to provide a battery grid of the type mentioned in the beginning which is not easily deformable and which can be handled during pasting, drying of the paste and sectionalizing into individual grids and further processing without causing disruption or loss of paste.

To achieve this object the invention provides a battery grid which is characterized in that the faces of the nodes on one side of the open network are plane and lie in the same plane as the face of the header on the one side of the open network, and the faces of the nodes on the opposite side of the open network are also plane but inclined at a predetermined acute angle to the same plane, so that the cross-section of the nodes is a trapezoid.

Such a battery grid is not easily deformable and can best be pasted and handled after pasting without causing loss of paste by undue treatment.

A preferred embodiment of the invention is characterized in that the cells have a minor to major axis ratio of between about 0.2 to 0.9. It is most preferred that the cells have a minor to major axis ratio of between about 0.5 and 0.7.

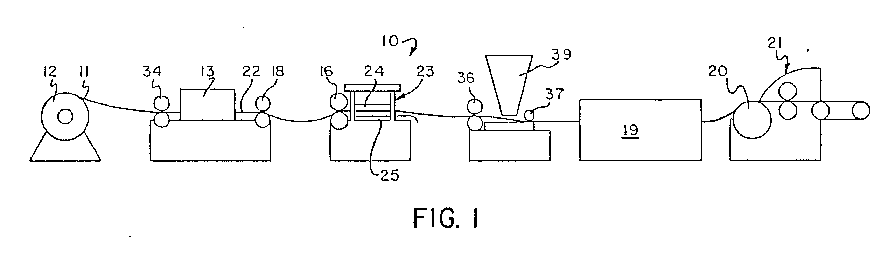

The invention will now be described more detailed by way of embodiments under reference to Figs. 1 to 6 of the drawing:

Fig. 1 is a schematic illustration of the production of battery grids according to an embodiment of the invention;

Fig. 2 is a front elevational view of plates for orienting and sizing battery grids in spaced apart position for inserting and withdrawing a battery grid according to the invention and illustrated also in Fig. 2;

Fig. 3 is a view similar to Fig. 2 but showing the plates in their closed condition for pressing a battery grid according to the invention between them and cutting a cut out portion;

Fig. 4 is a cross sectional view of a grid according to the invention before being pressed between the plates of Figs. 2 and 3;

Fig. 5 is a cross sectional view of the grid of Fig. 4 after it has been pressed between the plates of Figs. 2 and 3; and

Fig. 6 is a plan view of unsectionalized grid structures after being pressed and provided with cut out portions.

Referring now more particularly to the accompanying drawings, 10 indicates generally a battery grid line. In this battery grid line the grids are made initially from an unexpanded metal strip of stock material 11 of metal, such as lead or lead-base alloys, drawn from a pay off roll 12 and conveyed to a conventional expanding machine 13 in which the strip of stock material 11 is expanded to form a grid structure 30 by reciprocating slitting and expanding cutters (not shown). The strip is advanced intermittently.

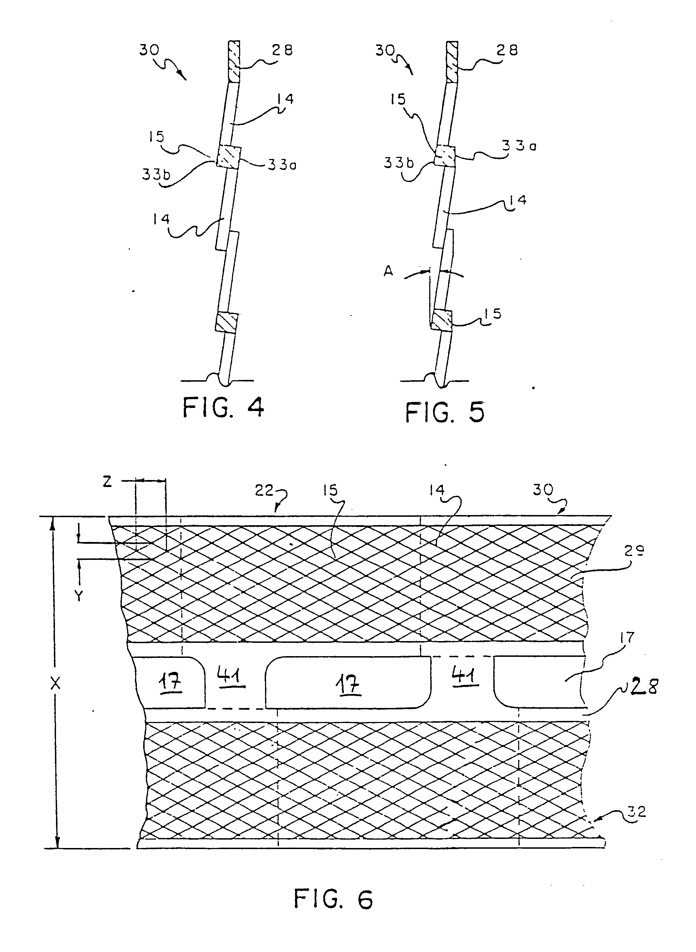

From such expansion operation there results in the expanded portions 22 a grid structure 30 (Fig. 4) having an open network 32 comprising a plurality of skeletal, wire-like elements 14 (Fig. 6) connected one to the other by nodes 15. The wire-like elements 14 and nodes 15 form a honeycomb-like structure in plan view (Fig. 6). In general, it has been found that a cell 29, as shown in Fig. 6, should have a ratio of Y to Z of preferably between about 0.2 to 0.9 and more preferably between about 0.4 to 0.8, most preferably between about 0.5 to 0.7.

Following expansion, the strip with expanded portions 22 is laid down into substantially the same plane as the original unexpanded strip of stock material 11 from which it was formed by advancing the strip having the expanded portions 22 through leveling rollers 18 located near the exit end of the expanding machine 13.

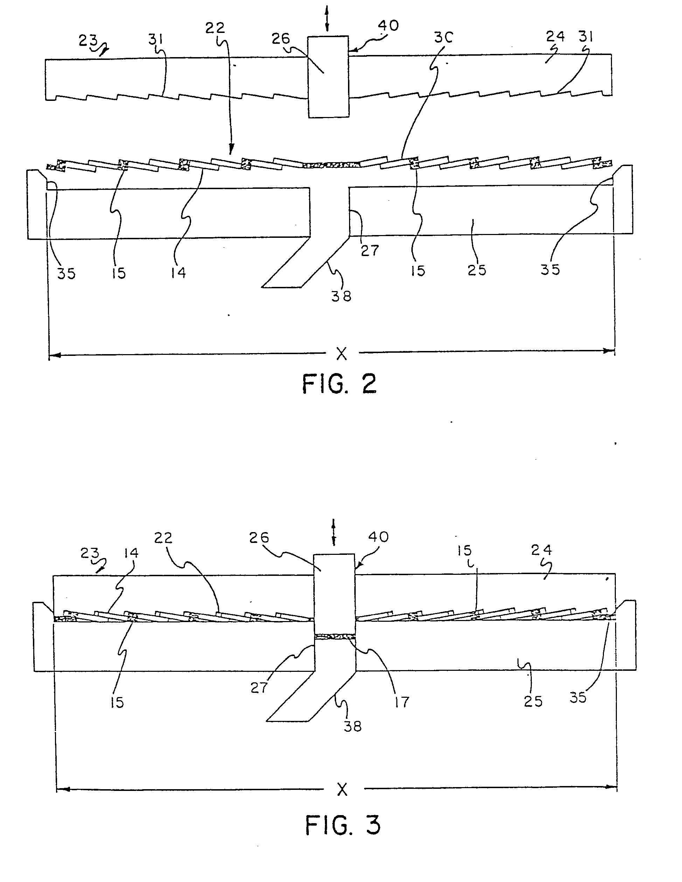

After leveling of the expanded strip, the strip is fed by spaced apart drive means 16 into a scrap removal and orienting and sizing apparatus 13. In this operation a cut out section is formed and the portion 17 so cut out is removed from the strip, this being readily accomplished by a punch and die arrangement 40. At the same time the expanded strip 22 is subjected to this cut out operation, the open network 32 is subjected to a sizing process so that the structure is formed to a predetermined grid form i.e. the grid of Fig. 5 is formed from a grid of Fig. 4 as described below in detail. Moreover the grid is confined to the width X (Fig. 3) and, therefore, the grid strip is also perfectly sized to a predetermined width.

Then the grid strip is conveyed to the next operation and is there ready for pasting via pasting machine 39. The pasting machine may employ flush pasting or belt pasting using conventional pasting techniques as is well-known in the art. The pasted grid structure is thereafter cured or dried by a conventional drying oven 19. The dried grid structure is then advanced to the plate separator device 21 where the structures are sectionalized one from the other.

Referring to Figures 2 and 3, the sizing and orienting apparatus 23 is shown comprising an upper plate 24 that is adapted to reciprocate within a housing (not shown) so that an upper plate 24 comes into contact with a lower plate 25. Of course, a wide range of means may be used to reciprocate the plate or plates, such means being well-known to those skilled in the art. It can be seen that the upper plate 24 is provided with a punch 26 which is set above a complementary die 27 into which the punch passes in order to cut out an opening within the unexpected central portion of a stock material. The cut out portion 17 set free passes down a chute 38. An array of inclined planes 31 is provided on the lower part of the upper plate 24 and is arranged to come into engagement with a grid structure 30. Thus, expanded strip 22 to be sized and oriented is pressed between an array of inclined planes 31 and the lower plate 25. In Figure 3 the closed form of the sizing and orienting apparatus 23 is depicted with the grid structure 30 showing its nodes 15 being oriented. In effect, the faces 33b are brought into contact with the inclined planes 31 when the plate 24 is brought downwardly and the faces 33a of the nodes 15 are brought into contact with the flat portion of lower plate 25. In this fashion, the expanded strip 22 is oriented so that the opposite faces 33a, 33b of the nodes 15 are worked to a predetermined angle. The grid structures 30 are formed to a uniform size by the inclined planes 31 and the rebates 35 of the lower plate 25 (Fig. 2). A plurality of grid structures 30 that are to be further pasted and sectionalized may be worked and sized all at the same time in a most economic manner.

In operation, after the expanded strip 22 has been formed, it is advanced to the orienting and sizing apparatus 23 which comprises a reciprocating upper plate 24 having a plurality of inclined planes 31 thereon along with a centrally located punch 26. The inclined planes 31 are so disposed outwardly of the plate and engage the nodes 15 of the grid network, when the upper plate 24 is brought in pressing engagement with the lower plate 25 via the expanded strip 22. Obviously the strip 22 is not advanced during this pressing operation. When the upper plate 24 moves downwardly and into contact with the lower plate 25 the punch 26 cuts out a portion 17 that falls through the chute 38 and the inclined planes 31 provided on the upper plate work the nodes 15 to orient and size the grid structure. It can be readily appreciated that the inclined plates 31 of the upper plate 24 are so arranged that the grid structure is readily formed as determined by the angle A of said inclined planes 31 and the distance between the rebates 35 of the apparatus. The acute angle A is greater than 3°, preferably between about 5° and 10°.

The preferred form of grid structure made in accordance with the drawings is an individual grid structure 30 formed from an expanded metal strip 22, generally a lead-base alloy, and provided with a header 28 and a lug connecting portion 41 of an unexpanded metal strip and an open network portion 32 of expanded metal 22, the open network 32 being defined by wire-like elements 14 which have been pasted and sectionalized as aforementioned. Figure 4 depicts a portion of the expanded strip 22 as it comes from the expander 13 and prior to being sized and oriented by the subject invention. The nodes 15 are more or less rectangular or rhomboid-like in cross section having their faces 33a and 33b so formed that they are substantially parallel. Figure 5 depicts the same portion of the grid structure after being subjected such that it has the structure in accordance with the invention. It can be seen that one face 33a is substantially parallel to the header and the other face 33b is inclined to said header by a predetermined angle A.

## Claims

1. A battery grid comprising a metal grid structure (30) defining a header (28) and a lug connecting portion (41) thereon, an open network (32) depending from the header (28) over the entire length thereof, said open network (32) defining cells (29) being provided with nodes (15) projecting therefrom and having opposed pairs of faces defining a polygonal cross-section, characterized in that the faces (33a) of said nodes (15) on one side of said open network (32) are plane and lie in the same plane as the face of said header (28) on the said one side of said open network (32), and the faces (33b) of said nodes (15) on the opposite side of said open network (32) are also plane but inclined at a predetermined acute angle (A) to the said same plane, so that the said cross-section of said nodes (15) is a trapezoid.

2. A battery grid according to claim 1, characterized in that said cells (29) have a minor to major axis ratio of between 0.2 and 0.9.

3. A battery grid according to claim 1, characterized in that said cells (29) have a minor to major axis ratio of between about 0.5 to 0.7.

## Patentansprüche

1. Batteriegitter, umfassend eine Metallgitterstruktur (30), auf der ein Verteiler (28) und ein Ansatzverbindungsteil (41) gebildet ist, sowie ein offenes Netzwerk (32), das von dem Verteiler (28) über die gesamte Länge desselben herabhängt, wobei das offene Netzwerk (32) Zellen (29) begrenzt, die mit Knoten (15) versehen sind, welche davon vorstehen und entgegengesetzte Paare von Flächen haben, die einen polygonalen Querschnitt definieren, dadurch gekennzeichnet, daß die Flächen (33a) der Knoten (15) auf einer Seite des offenen Netzwerks (32) eben sind und in der gleichen Ebene wie die Fläche des Verteilers (28) auf der erwähnten einen Seite des offenen Netzwerks (32) liegen und die Flächen (33b) der Knoten (15) auf der entgegengesetzten Seite des offenen Netzwerks (32) auch eben, jedoch unter einem vorbestimmten spitzen Winkel (A) zu der gleichen Ebene geneigt sind, so daß der Querschnitt der Knoten (15) ein Trapez ist.

2. Batteriegitter nach Anspruch 1, dadurch gekennzeichnet, daß die Zellen (29) ein Verhältnis von kleiner zu großer Achse haben, das zwischen 0,2 und 0,9 beträgt.

3. Batteriegitter nach Anspruch 1, dadurch gekennzeichnet, daß die Zellen (29) ein Verhältnis von kleiner zu großer Achse haben, das zwischen 0,5 und 0,7 beträgt.

## Revendications

1. Grille de batterie comprenant une structure de grille métallique (30) définissant un collecteur (28) et une partie de patte de raccordement (41), un réseau ouvert (32) qui part du collecteur (28) vers le bas et sur toute la longueur de celui-ci, ce réseau ouvert (32) définissant des cellules (29) avec des noeuds (15) qui font saillie par rapport aux cellules et qui présentent des paires opposées de faces définissant une section transversale polygonale, caractérisée en ce que les faces (33a) des noeuds (15) sur un premier côté du réseau ouvert (32) sont planes et se trouvent dans le même plan que la face du collecteur (28) sur ledit premier côté du réseau ouvert (32), et les faces (33b) des noeuds (15) du côté opposé du réseau ouvert (32) sont également planes mais inclinées d'un angle aigu prédéterminé (A) par rapport audit même plan, de sorte que ladite section transversale des noeuds (15) es trapézoïdale.

2. Grille de batterie suivant la revendication 1, caractérisée en ce que les cellules (29) ont un rapport du petit axe au grand axe compris entre 0,2 et 0,9.

3. Grille de batterie suivant la revendication 1, caractérisée en ce que les cellules (29) ont un rapport du petit axe au grand axe compris entre 0,5 et 0,7 environ.

FIG. 1

FIG. 2

FIG. 3

FIG. 4

FIG. 5

FIG. 6